# EUROPÄISCHE PATENTANMELDUNG

(11) **EP 2 208 743 A1**
(43) Veröffentlichungstag der Anmeldung: **21.07.2010**
(21) Anmeldenummer: 10000058.7
(22) Anmeldetag: 07.01.2010
(51) Int. Cl.: C08G 18/10, C08G 18/76

(54) **Reaktive Polyurethan Zusammensetzungen**

(30) Priorität: 17.01.2009 DE 102009005017
(71) Anmelder: Bayer MaterialScience AG, 51368 Leverkusen (DE)
(72) Erfinder: Leimenstoll, Marc, 40721 Hilden (DE); Karafilidis, Christos, 51375 Leverkusen (DE); Wintermantel, Matthias, 51465 Bergisch Gladbach (DE); Reichert, Peter, 41541 Dormagen (DE); Brassat, Lutz, 51375 Leverkusen (DE)

(57) **Zusammenfassung**

Die vorliegende Erfindung betrifft reaktive Polyurethanzusammensetzungen, die vor und nach Vernetzung nur geringe Mengen an freien niedermolekularen Diisocyanaten aufweisen, sowie deren Herstellung und deren Verwendung in reaktiven ein- und zweikomponentigen Kleb-/Dichtstoffen, Montageschäumen, Vergussmassen sowie in Weich-, Hart- und Integralschäumen.

## Beschreibung

Die vorliegende Erfindung betrifft reaktive Polyurethanzusammensetzungen, die vor und nach der Vernetzung nur geringe Mengen an freien niedermolekularen Diisocyanaten aufweisen, sowie deren Herstellung und deren Verwendung in reaktiven ein- und zweikomponentigen Kleb-/ Dichtstoffen, Montageschäumen, Vergussmassen sowie in Weich-, Hart- und Integralschäumen.

Reaktive Polyurethane verfügen über NCO-Endgruppen, die mit Wasser oder anderen Verbindungen, die über ein acides Wasserstoffatom verfügen, reagieren können. Diese Form der Reaktivität ermöglicht es, die reaktiven Polyurethane in verarbeitbarem Zustand, beispielsweise flüssig bis hochviskos, an den gewünschten Ort zu bringen und durch Zugabe von Wasser oder anderen Verbindungen, die über ein acides Wasserstoffatom verfügen, auszuhärten.

Reaktive Polyurethane können auf vielen technischen Gebieten eingesetzt werden. Ein wichtiges Anwendungsgebiet der Polyurethane sind z.B. Einkomponentenschäume aus Aerosölbehältern, auch als Aerosolschäume oder Montageschäume bezeichnet, sowie Kleb- und Dichtstoffe.

Bei diesen Anwendungsgebieten werden als Polyisocyanate zumeist Mischungen aus Diphenylmethandiisocyanat (MDI) und/oder Polyphenylenpolymethylenpolyisocyanaten, häufig auch als Roh-MDI oder Polymer-MDI bezeichnet, und/oder Umsetzungsprodukte aus Polyisocyanaten mit einem Unterschuss von Verbindungen mit mindestens zwei mit Isocyanatgruppen reaktiven Wasserstoffatomen, sogenannte NCO-Prepolymere, eingesetzt.

Bei reaktiven Polyurethanen für den Einsatz in Aerosolschäumen wird als Polyisocyanat zumeist Polymer-MDI eingesetzt. Dieses enthält üblicherweise einen hohen Anteil an 2-Kem- MDI.

Aerosolschäume sind im Bereich des Bauwesens häufig angewandte Montagemittel zum Einbau von Fenstern und Türen in Bauwerken sowie als Füllmaterial für bautechnisch bedingte Hohlräume oder Mauerdurchbrüche für Rohrinstallationen. Ein solcher Aerosolbehälter beinhaltet ein Prepolymer sowie Treibmittel und Zusätze. Durch Austragen seines Inhaltes mittels Treibmittel, seinem Aufschäumen durch Verdampfen des Treibmittels (sogenannte Frothwirkung) und seine Aushärtung mit Luftfeuchtigkeit entsteht der gewünschte Schaum.

Einkomponentenschäume auf der Basis von NCO-haltigen Prepolymeren sind die bekanntesten Schäume dieser Art. Es gibt hierbei unterschiedliche Produkte, die je nach Zusammensetzung zu harten bis weichelastischen Schäumen führen.

Reaktive Polyurethanzusammensetzungen enthalten herstellungsbedingt im allgemeinen noch niedermolekulare, monomere Isocyanate. Diese haben den Nachteil, dass sie gesundheitliche Gefahren hervorrufen können. So ist beim Übergang der Zusammensetzungen in die Dampfphase oder als Aerosol sicherzustellen, dass Personen nicht mit solchen Dämpfen in Kontakt treten können, die niedermolekulare, monomere Isocyanate enthalten. Weiterhin sind Hautkontakte mit solchen reaktiven Polyurethanzusammensetzungen möglichst zu vermeiden.

Da Schutz- und Reinigungsmaßnahmen in der Regel mit hohem technischen Aufwand, hohen finanziellen Investitionen oder Kosten verbunden sind, besteht seitens der Anwender ein Bedürfnis nach Produkten, die einen möglichst niedrigen Anteil an monomeren Diisocyanaten aufweisen. Aber nicht nur die Anwendung von reaktiven Polyurethanmassen, die noch monomere Diisocyanate enthalten führt zu Problemen, sondern bereits auch das Inverkehrbringen derartiger Massen. So fallen Stoffe und Zubereitungen, die beispielsweise mehr als 0,1 Gew.-% freies MDI oder TDI enthalten, unter die Gefahrstoffverordnung und sind entsprechend zu kennzeichnen. Mit der Kennzeichnungspflicht sind spezielle Maßnahmen zur Verpackung und dem Transport verbunden. Das Vorhandensein von monomerem, nicht umgesetztem Diisocyanat führt auch in der Weiterverarbeitung häufig zu Problemen. So können solche Diisocyanate aus der Beschichtung oder Verklebung in die beschichteten oder verklebten Materialien hinein migrieren.

Weiterhin sind nicht nur die monomeren, niedermolekularen Isocyanate gesundheitlich schädlich, auch die entstehenden Umsetzungsprodukte mit Wasser, beispielsweise aromatische Diamine oder Polyamine, sind gesundheitlich bedenklich. Durch Kontakt mit Feuchtigkeit werden Isocyanatgruppen kontinuierlich zu Aminogruppen und weiteren Folgeprodukten umgesetzt. Solche Verbindungen können nicht nur unmittelbar beim Aushärten der Polyurethansysteme entstehen. Durch die sich verlangsamende Reaktionsgeschwindigkeit es ist auch möglich, dass diese langfristig unter Benutzungsbedingungen, wie beispielsweise bei höheren Temperaturen und hoher Luftfeuchtigkeit, entstehen können. Diese Aminoverbindungen können auch an die Substratoberfläche wandern oder in umgebende Schichten. Solche wandernden Bestandteile auf Basis von niedermolekularen, aromatischen Di- oder Polyaminen werden im Folgenden als Migrate bezeichnet.

In Polyurethan-Integralschäumen, die beispielsweise bei der Herstellung von Lenkrädern in Kraftfahrzeugen verwendet werden, sind solche Migrate unerwünscht, da ein Kontakt der aus den Diisocyanaten entstandenen Amine mit der Haut nicht auszuschließen ist. Auch im Verpackungsbereich, speziell bei Lebensmittelverpackungen, sind Migrate unerwünscht. Es kann die Wanderung der Migrate durch das Verpackungsmaterial hindurch zu einer Kontamination des verpackten Gutes führen oder ein Hautkontakt mit der Verpackung kann solche Migrate übertragen.

Gemäß der WO 2001/0 040 342 können PU-Zusammensetzungen mit einem niedrigen Gehalt an monomeren Diisocyanaten in einem zweistufigen Verfahren hergestellt werden. Aus einem ersten Umsetzungsprodukt wird das nicht umgesetzte monomere Diisocyanat entfernt und das erhaltene Produkt weiter zu einem Prepolymeren mit höherem Molekulargewicht umgesetzt. Dieses Prepolymer eignet sich zur Verwendung als Bindemittel für reaktive ein- oder zweikomponentige Kleb- / Dichtstoffe oder reaktive Schmelzklebstoffe.

In der zur gleichen Patentfamilie gehörenden EP-A 1 237 971 werden PU-Zusammensetzungen mit niedrigem Gehalt an Isocyanatmonomeren beschrieben, wobei die monomeren Diisocyanate auf einen Gehalt von kleiner 10 Gew.-% reduziert werden, beispielsweise durch Ausfällen als nicht lösliche Verbindungen. Insbesondere wird die Verwendung von asymmetrischen Diisocyanaten in diesen PU-Verbindungen beschrieben.

Die EP-A 0 316 738 beschreibt ein Verfahren zur Herstellung von Urethangruppen aufweisenden Polyisocyanaten mit einem Gehalt an Ausgangsdiisocyanat von maximal 0,4 Gew.-% durch Umsetzung von aromatischen Diisocyanaten mit mehrwertigen Alkoholen und anschließender destillativer Entfernung des nicht umgesetzten, überschüssigen Ausgangsdiisocyanats.

In der DE-A 10 2004 038 784 wird ein Verfahren zur Herstellung von monomerenarmen Polyisocyanaten durch destillative Entfernung von monomerem Isocyanat aus monomeres Isocyanat enthaltenden Polyisocyanaten, Polyisocyanat-Prepolymeren und/oder Polyisocyanatderivaten beschrieben. Die dort beschriebene Lösung sieht vor, dass reaktive Polyisocyanate durch Einsatz von Fallfilm-Kurzwegverdampfern von monomeren Isocyanaten befreit werden. Insbesondere soll in den so behandelten Polyisocyanaten oder Prepolymeren der Restmonomergehalt kleiner 0,1 Gew.-% auf das Polyisocyanat betragen. Die Lehre beschreibt jedoch keine monomerarmen Prepolymere auf Basis von ausschließlich aromatischen polymeren Isocyanaten mit einer mittleren Funktionalität von größer 2, die mindestens zwei NCO-Gruppen aufweisen und einen Gehalt an nicht umgesetzten monomeren Isocyanaten von < 5 Gew.-% enthalten.

Nach der Lehre von EP-A 1 518 874 ist es bekannt, dass ein monomerarmes Isocyanat zur Fertigung von Einkomponentenschäumen verwendet wird, welches aus einem definierten Polyphenylen-polymethylenpolyisocyanat durch destillative Entfernung des monomeren Isocyanats gewonnen wird. Durch Einsatz dieses Produktes gegebenenfalls im Gemisch mit Verdünnungsmitteln und weiteren isocyanatgruppenhaltigen Verbindungen werden so monomerarme Einkomponentenschäume erhalten. Nachteilig hierbei ist, dass so gefertigte Einkomponenten-Aerosolschäume wenig lagerstabil sind, wodurch der Inhalt der Aerosoldruckbehälter innerhalb weniger Wochen fest und damit unbrauchbar wird.

Auch die WO2005/0 007 721 beschreibt den Einsatz von Gemischen aus monomerarmen NCOendständigen Prepolymeren, d.h. von Monomeren befreiten Umsetzungsprodukten aus Polyolen und Diphenylmethandiisocyanat im stöchiometrischen Überschuss, entmonomerisiertem Polyphenylenpolymethylenpolyisocyanat, trimerisiertem Hexamethylendiisocyanat und Verdünnungsmitteln. Nachteilig sind hier die zur Realisierung des geforderten verminderten Monomergehaltes an Isocyanat extrem hohen Viskositäten der Einsatzstoffe, die den Einsatz technologisch schwierig gestalten und die Tatsache, dass die Lagerstabilität wie bei der Lösung nach EP-A 1 518 874 nicht gewährleistet ist.

In der EP-B 1 451 239 wird ein Verfahren zur Herstellung von monomerarmen Prepolymeren durch Umsetzung von monomerem 2,4'-Diphenylmethandiisocyanat oder Mischungen von 2,4'-Diphenylmethandiisocyanat und 4,4'Diphenylmethandiisocyanat oder Mischungen von 2,4'-, 2,2'- und 4,4'-Diphenylmethandiisocyanat und Polyphenyl-Polymethylenpolyisocyanaten mit einem stöchiometrischen Unterschuss eines Polyetheralkohols und anschließender Destillation des Reaktionsprodukts mittels eines Kurzwegverdampfers beschrieben. Die erhaltenen Produkte sollen sich gegenüber monomerarmen Prepolymeren auf Basis von monomerem 4,4'-MDI durch signifikant geringere Viskositäten auszeichnen. Die Lehre beschreibt jedoch nicht die Viskositäten von monomerarmen Prepolymeren auf Basis von ausschließlich aromatischen polymeren Isocyanaten mit einer mittleren Funktionalität von größer 2.

In der EP-A 1 964 868 werden vernetzende 1-K oder 2-K PU-Zusammensetzungen beschrieben, welche Reaktionsprodukte aus Polyolen und aromatischen Diisocyanaten enthalten, wobei die Zusammensetzung weniger als 0,1 Gew.-% nicht umgesetzter monomere aromatische Isocyanate enthält. Nachteilig an diesen Zusammensetzungen ist ihre extrem hohe Viskosität, insbesondere wenn Polyole mit Funktionalitäten größer 2 verwendet werden.

Trotz des vorgenannten Standes der Technik zur Reduzierung der monomere Diisocyanate besteht weiterhin Bedarf an reaktiven Polyurethanzusammensetzungen, die vor und nach Vernetzung lediglich sehr geringe Mengen an freien niedermolekularen Diisocyanaten aufweisen, über hohe Funktionalitäten und niedrige Viskositäten verfügen. Die reaktiven Zusammensetzungen sollen sich sowohl für den Einsatz als ein- und zweikomponentige Kleb-/ Dichtstoffe, insbesondere als Schmelzklebstoffe oder Kaschierklebstoffe, als auch zur Herstellung von Vergussmassen, Montageschäumen sowie Weich-, Hart- und Integralschäumen eignen, und damit bestand die Aufgabe, diese bereitzustellen.

Die erfindungsgemäße Lösung dieser Aufgabe ist den Patentansprüchen zu entnehmen. Ein Gegenstand der vorliegenden Erfindung sind vernetzbare 1-Komponenten oder 2-Komponenten Polyurethanzusammensetzungen, die mindestens ein NCO-terminiertes Polyurethanprepolymer enthalten, **dadurch gekennzeichnet, dass** das NCO-terminierte Polyurethanprepolymer ein Reaktionsprodukt aus Polyolen und aromatischen polymeren Isocyanaten mit einer mittleren Funktionalität von größer 2 ist, es mindestens zwei NCO-Gruppen aufweist und einen Gehalt an nicht umgesetzten monomeren Isocyanaten von < 5 Gew.-% enthält.

Ein weiterer Gegenstand der Erfindung ist die Verwendung solcher 1K- oder 2K-PU-Zusammensetzungen als bzw. in Kleb- oder Dichtmassen. Ein weiterer Gegenstand der Erfindung ist die Verwendung dieser Zusammensetzungen als reaktive Vergussmasse oder als aushärtende plastische Masse. Ein weiterer Gegenstand der Erfindung ist die Verwendung dieser Zusammensetzungen als aufschäumende Masse. Ein weiterer Gegenstand der vorliegenden Erfindung sind Formkörper, hergestellt aus erfindungsgemäßen Polyurethanzusammensetzungen durch Formgebung und anschließender Vernetzung.

Die erfindungsgemäß geeigneten PU-Zusammensetzungen werden ausgehend von reaktiven NCO-terminierten Polyurethanprepolymeren hergestellt. Verfahren und Herstellungsweise solcher reaktiven NCO-terminierten Polyurethanprepolymere sind dem Fachmann bekannt. Solche NCO-terminierten Polyurethanprepolymere, die zumindest anteilig in den erfindungsgemäßen PU-Zusammensetzungen enthalten sein müssen, sind Umsetzungsprodukte aus polymeren Polyisocyanaten und Polyolen. Zur Durchführung der Reaktion wird ein NCO/OH-Verhältnis größer als 1 gewählt, und infolgedessen werden NCO-reaktive Produkte erhalten.

Als Polyole sind die üblichen dem Fachmann bekannten Polyolverbindungen einzusetzen. Im Rahmen der Erfindung können eine Vielzahl von mehrfunktionellen Alkoholen eingesetzt werden. Diese sollen 2 bis 10, insbesondere von 2 bis 4 OH-Gruppen pro Molekül aufweisen. Es kann sich dabei um niedermolekulare Verbindungen handeln oder um OH-funktionelle Polymere. Es ist jedoch notwendig, dass diese Verbindungen keine weiteren mit NCO-Gruppen reaktiven funktionellen Gruppen aufweisen. Bei den Verbindungen mit mehreren OH-Gruppen kann es sich um solche handeln, die ausschließlich endständige OH-Gruppen tragen, oder es können Verbindungen sein, die über die Kette verteilt (auch) seitenständige OH-Gruppen aufweisen. Bei den zu berücksichtigenden OH-Gruppen handelt es sich jedenfalls um solche, die mit Isocyanaten reagieren können. Es kann sich um primäre, sekundäre oder tertiäre OH-Gruppen handeln, bevorzugt sind jedoch primäre oder sekundäre OH-Gruppen. Beispiele für geeignete Verbindungen dieser Art sind Polyole auf Basis von Polyethern, Polyestern oder Polyalkylenen, die flüssig, amorph oder kristallin sein können.

Geeignet sind beispielsweise aliphatische oder araliphatische Alkohole mit 2 -10 OH-Gruppen pro Molekül. Es können bevorzugt primäre und sekundäre Alkohole eingesetzt werden. Es können trifunktionelle Alkohole wie Glycerin, Trimethylolethan und/oder Trimethylolpropan oder höher funktioneller Alkohole, wie beispielsweise Pentaerythrit oder Zuckeralkohole, eingesetzt werden. Es können auch Hydroxyalkyl-substituierte Phenole eingesetzt werden oder cycloaliphatische Diole oder Polyole.

Zu den geeigneten aliphatischen Alkoholen zählen beispielsweise Ethylenglykol, Propylenglykol, Butandiol-1,4, Pentandiol-1,5, Hexandiol-1,6, Heptandiol-1,7, Octandiol-1,8 1,10-Decandiol, 1,12-Dodecandiol, Dimerfettalkohol und deren höhere Homologen oder Isomeren. Ebenfalls geeignet sind höherfunktionelle Alkohole wie beispielsweise Glycerin, Trimethylolpropan, Pentaerythrit oder ihre Homologe. Geeignete aliphatische Alkohole besitzen ein Molekulargewicht von 60 bis 600 g/mol, insbesondere bis ungefähr 400 g/mol. Insbesondere werden jedoch lineare Alkohole mit 2 bis 30 C-Atomen eingesetzt, die zwei bis zu vier OH-Gruppen aufweisen.

Ebenfalls geeignet als Polyolkomponente sind Umsetzungsprodukte niedermolekularer polyfunktioneller Alkohole mit Alkylenoxiden, sogenannte Polyether. Die Alkylenoxide weisen vorzugsweise 2 bis 4 C-Atome auf. Geeignet sind beispielsweise die Umsetzungsprodukte von Ethylenglykol, Propylenglykol, den isomeren Butandiolen, Hexandiolen oder 4,4'-Dihydroxydiphenylpropan mit Ethylenoxid, Propylenoxid, Butylenoxid oder Gemischen aus zwei oder mehr davon. Ferner sind auch die Umsetzungsprodukte polyfunktioneller Alkohole, wie Glycerin, Trimethylolethan oder Trimethylolpropan, Pentaerythrit oder Zuckeralkohole mit den genannten Alkylenoxiden zu Polyetherpolyolen geeignet. Weitere, im Rahmen der Erfindung geeignete Polyole, entstehen durch Polymerisation von Tetrahydrofuran (Poly-THF). Die Polyetherpolyole sind bekannt und kommerziell erhältlich.

Insbesondere geeignet sind beispielsweise Polyetherpolyole mit einem Molekulargewicht von 100-10000 g/mol, vorzugsweise 400 - 6000 g/mol (zahlenmittleres Molekulargewicht Mₙ , gemessen über GPC) und insbesondere Polypropylenglykol oder Polyethylenglykol mit 2 bis 4 OH-Gruppen. Es können statistische und/oder Blockcopolymere eingesetzt werden.

Weiterhin sind Polyesterpolyole geeignet. Polyesterpolyole sind bei Raumtemperatur entweder flüssig (Glasübergangstemperatur T_{g} < 20°C) oder fest. Bei Raumtemperatur feste Polyesterpolyole sind dabei entweder amorph (Glasübergangstemperatur T_{g} > 20°C) oder kristallisierend.

Geeignete kristallisierende Polyester sind beispielsweise solche auf Basis linearer aliphatischer Dicarbonsäuren mit mindestens 2 Kohlenstoffatomen, bevorzugt mindestens 6 Kohlenstoffatomen, besonders bevorzugt 6 bis 14 Kohlenstoffatomen im Molekül wie z.B. Adipinsäure, Azelainsäure, Sebacinsäure und Dodecandisäure, vorzugsweise Adipinsäure und Dodecandisäure und linearen Diolen mit mindestens 2 Kohlenstoffatomen, bevorzugt mindestens 4 Kohlenstoffatomen, besonders bevorzugt 4 - 6 Kohlenstoffatomen im Molekül, vorzugsweise mit einer geraden Anzahl von Kohlenstoffatomen wie beispielsweise 1,4-Butandiol und 1,6-Hexandiol. Ebenso sind die Polycaprolactonderivate basierend auf bifunktionellen Startmolekülen wie beispielsweise 1,6-Hexandiol als besonders geeignet zu nennen.

Geeignete amorphe Polyesterpolyole sind beispielsweise solche auf Basis von Adipinsäure, Isophthalsäure, Terephthalsäure, Ethylenglykol, Neopentylglykol und 3-Hydroxy-2,2-dimethylpropyl-3-hydroxy-2,2-dimethylpropanoat.

Geeignete bei Raumtemperatur flüssige Polyesterpolyole sind beispielsweise solche auf Basis von Adipinsäure, Ethylenglykol, 1,6-Hexandiol und Neopentylglykol.

Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäure-enthaltenden Fettgemisches mit einem oder mehreren Alkoholen mit 1 bis 12C-Atomen und anschließender partieller Umesterung der Triglycerid-Derivate zu Alkylesterpolyolen mit 1 bis 12C-Atomen im Alkylrest hergestellt werden. Dem Fachmann sind OH-funktionelle Polyester allgemein bekannt und sie sind kommerziell erhältlich. Insbesondere geeignet sind zwei oder drei endständige OH-Gruppen enthaltende Polyesterpolyole. Polyesterpolyole weisen bevorzugt ein Molekulargewicht von ca. 100 bis 6000 g/mol auf, insbesondere unter 5000 g/mol.

Eine weitere geeignete Gruppe von Polyalkoholen sind Polyurethanpolyole. Es handelt sich dabei um Umsetzungsprodukte von Polyisocyanaten, bevorzugt Diisocyanaten, mit Polyolen, insbesondere Diolen. Dabei können die Polyole aus der oben erwähnten Gruppe von Polyolen ausgewählt werden. Die Mengen werden so gewählt, dass endständig OH-terminierte Produkte erhalten werden. Die Funktionalität der PU-Polyole soll bevorzugt zwischen 2 und 4 betragen. Das Molekulargewicht soll zwischen 100 bis zu 6000 g/mol betragen. Solche OH-terminierten PU-Polyole sind dem Fachmann bekannt.

Weitere geeignete Polyole sind beispielsweise Polycarbonat-Polyole und Dimerdiole, sowie Rizinusöl und dessen Derivate. Auch die Hydroxy-funktionellen Polybutadiene, wie sie z.B. unter dem Handelsnamen "Poly-bd" erhältlich sind, können für die erfindungsgemäßen Zusammensetzungen als Polyole eingesetzt werden. Ebenfalls als Polyolkomponente geeignet sind Polyacetale. Polyacetale sind beispielsweise Umsetzungsprodukte aus Glykolen, beispielsweise Diethylenglykol oder Hexandiol, mit Formaldehyd. Polyacetale können ebenfalls durch die Polymerisation cyclischer Acetale erhalten werden. Weiterhin als Polyole geeignet sind Polycarbonate. Eine weitere Gruppe der erfindungsgemäß einsetzbaren Polyole sind die Polyester auf der Basis von ε-Caprolacton. Solche Polyole sollen im Molekül mindestens 2 OH-Gruppen aufweisen.

Als Isocyanat in den erfindungsgemäßen Isocyanat-Umsetzungsprodukten können alle dem Fachmann bekannten polymeren Polyisocyanate eingesetzt werden. Es handelt sich dabei bevorzugt um aromatische Isocyanatverbindungen, die zwei oder mehr NCO-Gruppen aufweisen können. Besonders bevorzugt sind Polyphenylenpolydimethylenpolyisocyanate enthaltend Anteile an monomeren aromatischen Diisocyanaten. Hierbei handelt es sich beispielsweise um die bekannten technischen Rohstoffe "Roh-MDI" und das daraus erhältliche "Polymer-MDI". Unter Roh-MDI versteht der Fachmann das während der technischen Synthese des MDI nach dem Phosgenierungsschritt anfallende Rohprodukt, welches eine Mischung der bekannten zweikernigen MDI-Isomeren und mehrkernigen (≥ 3) Oligomeren ist. Aus diesem wird durch einen weiteren destillativen Aufbereitungsschritt das sogenannte Polymer-MDI erhalten, bei welchem es sich um eine an zweikernigen MDI-Isomeren und anderen niedrig siedenden Nebenprodukten verarmtes Roh-MDI handelt.

Anteilsmäßig können ggf. auch aliphatische oder cycloaliphatische Isocyanate enthalten sein.

Monomere Diisocyanate sind beispielsweise ausgewählt aus der Gruppe Diphenylmethandiisocyanat (MDI) mit all seinen Isomeren [4,4'-Diphenylmethandiisocyanat (4,4'-MDI), 2,4'-Diphenylmethandiisocyanat (2,4'-MDI), 2,2'-Diphenylmethandiisocyanat (2,2'-MDI)], hydriertes oder teilhydriertes MDI (H12MDI, H6MDI), Xylylendiisocyanat (XDI), Tetramethylxylylendiisocyanat (TMXDI), Di- und Tetraalkylendiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI), 1-Methyl-2,4-diisocyanatocyclohexan, 1,6-Diisocyanato-2,2,4-trimethylhexan, 1,6-Diisocya-nato-2,4,4-trimethylhexan, 1-Isocyanatomethyl-3-isocyanato-1,5,5-trimethylcyclo-hexan (IPDI), chlorierte und bromierte Diisocyanate, phosphorhaltige Diisocyanate, Tetra-methoxybutan-1,4-diisocyanat, Naphthalin-1,5-diisocyanat (NDI), Butan-1,4-diisocyanat, Hexan-1,6-diisocyanat (HDI), Dicyclohexylmethandiisocyanat, Tetramethylen-, Hexamethylen-, Undecan-, Dodecamethylen-, 2,2,4-Trimethyl-hexan-2,3,3-Trimethyl-hexamethylendiiso-cyanat, Cyclohexan-1,4-diisocyanat, Ethylendiisocyanat, Triphenylmethan-4,4',4"-triisocyanat (MIT), Phthalsäure-bis-isocyanato-ethylester, Diisocyanate mit reaktionsfähigen Halogenatomen, wie 1-Chlor-methylphenyl-2,4-diisocyanat, 1-Brommethyl-phenyl-2,6-diisocyanat,3,3-Bis-chlormethylether-4,4'-diphenyldiisocyanat. Weitere einsetzbare Diisocyanate sind Trimethylhexamethylendiisocyanat, 1,4-Diisocyanatobutan, 1,12-Diisocyanatododecan und Dimerfettsäurediisocyanat, Lysinesterdiisocyanat, 4,4-Dicyclohexylmethandiisocyanat, 1,3-Cyclohexan- oder 1,4-Cyclohexandiisocyanat.

Insbesondere geeignet sind auch monomere, asymmetrische Diisocyanate, die NCO-Gruppen mit einer unterschiedlichen Reaktivität gegenüber Diolen besitzen. Beispiele für besonders geeignete aromatische Diisocyanate mit unterschiedlich reaktiven NCO-Gruppen sind die Isomeren des TDI, NDI, 1,3-Phenylendiisocyanat oder 2,4' MDI. Mindestens 50% der NCO-Gruppen des Isocyanatumsetzungsprodukts sind auf Basis aromatischer Isocyanate, insbesondere über 90 %.

Aus den oben erwähnten Polyolen und polymeren Polyisocyanaten enthaltend Anteile an monomeren Diisocyanaten werden durch bekannte Verfahren die erfindungsgemäß geeigneten NCO-terminierten Polyurethanprepolymere hergestellt. Das kann beispielsweise bei Raumtemperatur geschehen, es können auch erhöhte Temperaturen angewandt werden. Die Ausgangsverbindungen reagieren im allgemeinen spontan miteinander, es kann aber auch notwendig sein, dass Katalysatoren, wie metallorganische Verbindungen oder organische Aminoverbindungen zugesetzt werden. Weiterhin werden die bekannten Verfahren eingesetzt, die nicht umgesetzten Anteile an monomeren Diisocyanaten zu entfernen. Das kann beispielsweise durch Destillation geschehen, durch Fällen oder durch Abfangen der monomeren Diisocyanate durch niedermolekulare reaktive Bestandteile. Bevorzugt wird das Verfahren der Destillation unter Verwendung eines Kurzwegverdampfers.

Die erfindungsgemäßen NCO-terminierten Polyurethanprepolymere sollen ein Gehalt an monomeren, nicht umgesetzten aromatischen Diisocyanaten von unterhalb 5 Gew.-%, bevorzugt unterhalb 3 Gew.-%, besonders bevorzugt unterhalb 1 Gew.-%, ganz besonders bevorzugt unterhalb 0,2 Gew.-% aufweisen. Die Anzahl der NCO-Gruppen pro Molekül beträgt zwischen 1 bis 5, bevorzugt 2 bis 4, insbesondere sind ausschließlich reaktive aromatische Isocyanatgruppen enthalten. Die Umsetzungsprodukte enthalten mindestens zwei Urethangruppen im Molekül.

Je nach Molekulargewicht und den ausgewählten Polyolkomponenten können diese Isocyanatumsetzungsprodukte flüssig oder fest vorliegen. Ebenfalls ist es möglich, dass die NCO-terminierten Polyurethanprepolymere in inerten organischen Lösemitteln gelöst sind.

Diese NCO-terminierten Polyurethanprepolymere können als vernetzende Bestandteile direkt in reaktiven PU-Zusammensetzungen eingesetzt werden, beispielsweise in 1 K- oder 2K-PU-Zusammensetzungen, oder sie werden in weiteren Reaktionsschritten mit geeigneten Verbindungen umgesetzt, beispielsweise den oben aufgezählten OH-Polyolen, die mit den NCO-Gruppen reagieren können. Solche PU-Prepolymere können dann beispielsweise in den oben erwähnten PU-Zusammensetzungen eingesetzt werden.

Die erfindungsgemäßen reaktiven Polyurethanprepolymere können in reaktiven ein- und zweikomponentigen Kleb-/ Dichtstoffen, Montageschäumen, Vergussmassen sowie in Weich-, Hart- und Integralschäumen verwendet werden. Ein wesentlicher Vorteil gegenüber den bekannten reaktiven Polyurethanzusammensetzungen ist der signifikant niedrigere Anteil an arbeitshygienisch bedenklichen, migrationsfähigen, aromatischen monomeren Diisocyanaten.

Die erfindungsgemäßen PU-Zusammensetzungen können noch weitere Additive enthalten. Dabei kann es sich beispielsweise um Katalysatoren, Harze, Lösemittel, Pigmente, Stabilisatoren, Haftvermittler, Farbstoffe, Verlaufsmittel und ähnliche Hilfsstoffe handeln. Diese kann der Fachmann je nach dem Anwendungszweck auswählen.

Eine bevorzugte Anwendung der PU-Zusammensetzungen sind reaktive, einkomponentige feuchtigkeitshärtenden Schmelzklebstoffe. Diese Schmelzklebstoffe können zusätzlich klebrigmachende Harze, haftvermittelnde Zusätze, Füllstoffe, Pigmente, Weichmacher, Stabilisatoren und/oder Katalysatoren, Wachse oder deren Mischungen sowie weitere übliche Hilfs- und Zusatzstoffe enthalten.

Als klebrigmachende Harze können z.B. Abietinsäure, Abietinsäureester, Terpenharze, Terpenphenolharze, phenolmodifizierte Styrolpolymere, phenolmodifizierte α-Methylstyrolpolymere oder Kohlenwasserstoffharze Verwendung finden. Als Katalysatoren sind die bekannten metallorganischen und / oder aminischen Katalysatoren in Mengen bis zu 2 % geeignet, z.B. die metallorganische Verbindungen des Zinns, Eisens, Titans oder Wismuts wie Zinn(II)salze von Carbonsäuren oder die Dialkyl-Zinn(IV)-Carboxylate. Als Antioxidantien können beispielsweise die handelsüblichen sterisch gehinderten Phenole und/oder Thioether und/oder substituierten Benzotriazole oder die sterisch gehinderten Amine vom Typ des HALS eingesetzt werden. In speziellen Zusammensetzungen können insbesondere auch Weichmacher zugesetzt werden. Dabei handelt es sich bevorzugt um Weichmacher vom Typ Phthalsäureester oder naphthenische Öle.

Eine weitere Ausführungsform der Erfindung setzt die erfindungsgemäßen PU-Zusammensetzungen als Kaschierklebstoff ein. Bei der Verwendung als Kaschierklebstoff kann zum Erreichen bestimmter zusätzlicher Eigenschaften, wie thermischer und chemischer Beständigkeit, noch ein Zusatz von Epoxidharzen, Phenolharzen, Novolaken, Resolen oder Melaminharzen und ähnlichen Polymeren zweckmäßig sein. Außerdem können in diesem Fall die reaktiven PU-Zusammensetzungen auch in Lösung bereitgestellt werden, vorzugsweise in polaren, aprotischen Lösungsmitteln. Die bevorzugten Lösungsmittel haben dabei einen Siedebereich (bei Normaldruck) von etwa 50°C bis 140°C.

Eine weitere Ausführungsform der Erfindung setzt die erfindungsgemäßen PU-Zusammensetzungen als flüssige 1 K- oder 2K-Klebstoffe oder Dichtmassen ein. Bei 2K-Systemen kann die zweite Bindemittelkomponente nach dem Anwendungszweck und den Eigenschaften ausgewählt werden. Es kann sich dabei um solche Verbindungen handeln, die mindestens zwei mit NCO-Gruppen reaktive funktionelle Gruppen aufweisen. Beispiele dafür sind OH, SH, COOH, NH, NH₂-Gruppen, bevorzugt Polyole. Die Auswahl der Polyole richtet sich dabei nach der Verwendungsart dieser Kleb-/ Dichtstoff-Zusammensetzung, beispielsweise hydroxyfunktionelle Polyole auf Polyester-, Polyurethan- Polyether- oder Polyolefinbasis. Bei 1 K-Kleb/ Dichtstoffen wird bevorzugt das NCO-terminierte Polyurethanprepolymer zu höhermolekularen PU-Prepolymeren umgesetzt oder ist zusätzlich enthalten. Es werden dann durch Feuchtigkeit vernetzende Systeme erhalten.

Die erfindungsgemäß geeigneten 1 K- oder 2K-Polyurethanzusammensetzungen sind insbesondere auch als Polyurethanschaum einzusetzen. Es handelt sich dabei um Mischungen von reaktiven Polyurethanen, die entweder bei der Applikation unter den Bedingungen der Aushärtung einen Schaum bilden, beispielsweise durch Reaktion mit Luftfeuchtigkeit, oder es handelt sich um Mischungen, die schaumbildende Substanzen enthalten. Dabei kann es sich um komprimierte Gase handeln, die unter verminderten Druck aufschäumen, wie beispielsweise CO₂, N₂O usw. In selbstschäumenden PU-Zusammensetzungen ist es insbesondere zweckmäßig, wenn zusätzlich hochmolekulare, polymere Polyisocyanate enthalten sind. Sie sollen keine monomere Isocyanate enthalten, bzw. weniger als 0,1 Gew.-%.

Polyurethanschäume gemäß der Erfindung können noch weitere dem Fachmann bekannten Additive enthalten, wie beispielsweise Haftvermittler, Weichmacher, Netzmittel, Füllstoffe, Flammschutzmittel, Schaumbildner, Fasern, Masterbatche oder Pigmente. Insbesondere enthalten sie Katalysatoren, die für eine schnelle Aushärtereaktion und Verschäumungsreaktion geeignet sind. Es handelt sich dabei im allgemein um aliphatische tertiäre Amine, beispielsweise solche, die zusätzlich noch gegenüber den Isocyanaten reaktive Gruppen tragen. Ganz besonders bevorzugte Katalysatoren sind jedoch die Derivate des Morpholins, wie Bis-(morpholinopropyl)-propylamin, Morpholinopropylpyrrolidon oder Dimorpholinodiethylether (DMDEE) oder Di-2,6-dimethylmorpholinoethylether.

Montageschäume werden am Ort ihrer Verwendung erzeugt, man spricht daher auch von einem Ortschaum, insbesondere handelt es sich hier um feuchtigkeitshärtende Einkomponenten-Systeme. Die zu verschäumende Zusammensetzung befindet sich dabei in der Regel in Einweg-Druckbehältern. Diese Schäume aus Polyurethan dienen vor allem im Bauwesen zum Dichten, Dämmen und Montieren, z.B. von Fugen, Dachflächen, Fenstern und Türen. Es können aber die erfindungsgemäßen NCO-terminierten Polyurethanprepolymere auch in PU-Schaummaterialien eingesetzt werden, beispielsweise als PU-Hartschaum für Gegenstände.

Eine weitere bevorzugte Anwendungsform verwendet die erfindungsgemäßen Polyurethanzusammensetzungen als Bestandteil von knetbaren Formmassen oder Vergussmassen. Es handelt sich dabei beispielsweise um aushärtbare flüssige oder pastöse Massen, die auch in Lebensmittelbereich oder im medizinischen Bereich eingesetzt werden können. Dabei ist darauf zu achten, dass die ggf. noch zusätzlich notwendige Hilfsstoffe und Additive keine gesundheitsgefährdenden Eigenschaften aufweisen, insbesondere sollen sie die entsprechende Zulassung zur Verwendung in medizinischen Produkten aufweisen. Beispiele für solche Massen sind Vergussmassen zum Verkleben von Dialysefiltern, Vergußmassen zum Verkleben von Filtern für flüssige Lebensmittel, knetbare Formmassen zur Verwendung als Gipsersatz in der Medizintechnik, oder ähnliche Verwendungen. Dabei sind die prinzipiellen Zusammensetzungen solcher Massen bekannt, die erfindungsgemäß einsetzbaren reaktiven PU-Zusammensetzungen ergeben jedoch Produkte, die im wesentlichen keine migrationsfähigen gesundheitsgefährdenden Polyamine und/oder monomere aromatische Diisocyanate enthalten.

Besonders geeignet sind die erfindungsgemäßen Zusammensetzungen in Verwendungen, die eine Gefährdung von Menschen hervorrufen können. Beispiele dafür sind verklebte Gegenstände, wie Folien, Etiketten, Verpackungen, die mit Lebensmitteln in Kontakt kommen können. Weitere Beispiele sind Gegenstände im medizinischen Bereich, beispielsweise Pflaster, Filter, medizinisches Stützmaterial, wie Gipsersatz, und ähnliche Produkte. Weiterhin sind auch aus PU-Materialien hergestellte Gegenstände betroffen, die in häufigen Kontakt mit Menschen sind, wie beispielsweise Kleidung, Schuhe, Möbeloberflächen oder Oberflächen von Anbauteile in Kraftfahrzeugen.

Die aus den erfindungsgemäßen 1K- oder 2K-PU-Zusammensetzungen hergestellten Gegenstände und Produkte enthalten nach der Vernetzung keine migrationfähigen Bestandteile, die aus den Isocyanaten oder ihren Vorprodukten stammen. Auch bei späteren Verarbeitungsschritten, wie Sterilisieren, Erwärmung durch das Füllgut, Lagerung bei feuchter Atmosphäre, entstehen auch auf längere Zeit keine oder nur sehr geringe, aus heutiger Sicht unkritische Anteile an migrationsfähigen aromatischen Polyamin.

Die erfindungsgemäß geeigneten reaktiven Isocyanatumsetzungsprodukte oder PU-Prepolymere und die daraus hergestellten Polyurethan-Zusammensetzungen werden insbesondere in reaktiven Kleb-/ Dichtstoffen, Vergussmassen sowie in Weich-, Hart- und Integralschäumen verwendet. Die Verwendung geschieht beispielsweise in ein- oder zweikomponentiger Form. Es werden Produkte mit guter Vernetzungsreaktion und guten mechanischen Eigenschaften erhalten, ohne dass zusätzlich NCO-Gruppen enthaltende oligomere oder monomere Isocyanate eingesetzt werden müssen. Ein Vorteil gegenüber den bekannten reaktiven ein- und zweikomponentigen Kleb-/ Dichtstoffen, Montageschäumen, Vergussmassen sowie Weich-, Hart- und Integralschäumen ist der signifikant niedrigere Anteil an arbeitshygienisch bedenklichen und migrationsfähigen monomeren Diisocyanaten und/oder deren Hydrolyseprodukten. Ein weiterer Vorteil gegenüber bekannten monomerarmen reaktiven Polyurethanen liegt in der signifikant verminderten Viskosität der erfindungsgemäßen Zusammensetzungen.

Die vorliegende Erfindung wird nachfolgend durch Beispiele erläutert.

### Beispiele

Desmophen^{®} 1262 BD, Desmophen^{®} 1111 BD und Desmophen^{®} VPPU 28HS98 sind Polyether der Firma Bayer MaterialScience AG.

Desmodur^{®} 2460 M, Desmodur^{®} VKS 20 und Desmodur^{®} VK5 sind monomeres bzw. polymer-MDI der Firma Bayer MaterialScience AG.

### Beispiel 1 (Vergleichsversuch):

Es werden 702,67 g Desmodur^{®} 2460 M bei 80 °C vorgelegt und 297,33 g einer entwässerten Mischung aus 6,4 Gew.-% Desmophen^{®} 1262 BD, 18,6 Gew.-% Desmophen^{®} 1111 BD und 75,0 Gew.-% g Desmophen^{®} VPPU 28HS98 dem Isocyanat zudosiert und so lange unter Rühren bei 80 °C gehalten, bis ein konstanter NCO-Gehalt erreicht wird. Anschließend wird das Produkt bei 180 °C und 0,03 mbar über einen Kurzwegverdampfer destilliert. Es entsteht ein Produkt mit einem NCO-Gehalt von 6,9 Gew.-%, einem Gehalt an freiem Diisocyanat von 0,18 Gew.-%, einer Viskosität von 350 200 mPas bei 50 °C und einer berechneten Funktionalität von 3.

### Beispiel 2 (erfindungsgemäß):

Es werden 629,07 g Desmodur^{®} VK5 bei 80 °C vorgelegt und 370,93 g einer entwässerten Mischung aus 25,65 Gew.-% Desmophen^{®} 1262 BD und 74,35 Gew.-% Desmophen^{®} 1111 BD dem Isocyanat zudosiert und so lange unter Rühren bei 80 °C gehalten, bis ein konstanter NCO-Gehalt erreicht wird. Anschließend wird das Produkt bei 180 °C und 0,03 mbar über einen Kurzwegverdampfer destilliert. Es entsteht ein Produkt mit einem NCO-Gehalt von 6,4 Gew.-%, einem Gehalt an freiem Diisocyanat von 0,18 Gew.-%, einer Viskosität von 25 000 mPas bei 50 °C und einer berechneten Funktionalität von 3.

### Beispiel 3 (erfindungsgemäß):

Es werden 1599,70 g Desmodur^{®} VK20 bei 80 °C vorgelegt und 900,30 g einer entwässerten Mischung aus 25,65 Gew.-% Desmophen^{®} 1262 BD und 74,35 Gew.-% Desmophen^{®} 1111 BD dem Isocyanat zudosiert und solange unter Rühren bei 80 °C gehalten, bis ein konstanter NCO-Gehalt erreicht wird. Anschließend wird das Produkt bei 180 °C und 0,03 mbar über einen Kurzwegverdampfer destilliert. Es entsteht ein Produkt mit einem NCO-Gehalt von 11,81 Gew.-%, einem Gehalt an freiem Diisocyanat von 0,44 Gew.-%, einer Viskosität von 85 900 mPas bei 50 °C und einer berechneten Funktionalität von 4,81.

### Beispiel 4 (Vergleichsversuch):

Desmodur^{®} VKS 20 wird über eine Verdampferkaskade bestehend aus einem Vorverdampfer und einem Hauptverdampfer (Kurzwegverdampfer) bei 195 °C und 0,16 - 0,44 mbar im Vorverdampfer und 180 °C und 0,20 - 0,35 mbar im Kurzwegverdampfer entmonomerisiert. Es entsteht ein Produkt mit einem NCO-Gehalt von 28,50 Gew.-%, einem Gehalt an freiem Diisocyanat von 1,30 Gew.-%, einer Viskosität von 4 840 mPas bei 50 °C und einer berechneten Funktionalität von 3,55.

Es werden 611,22 g entmonomerisiertes Desmodur^{®} VKS 20 bei 80 °C vorgelegt und 388,78 g einer entwässerten Mischung aus 25,64 Gew.-% Desmophen^{®} 1262 BD und 74,36 Gew.-% Desmophen 1111 BD dem Isocyanat zudosiert und solange unter Rühren bei 80 °C gehalten, bis ein konstanter NCO-Gehalt erreicht wird. Es entsteht ein Produkt mit einem NCO-Gehalt von 12,71 Gew.-%, einem Gehalt an freiem Diisocyanat von 0,4 Gew.-%, einer Viskosität von 896 000 mPas bei 50 °C und einer berechneten Funktionalität von 4,80.

Der NCO Gehalt wird nach DIN EN 1242 bestimmt.

Die Bestimmung der Viskosität erfolgt mit dem MCR 301 Rheometer der Firma Anton-Paar. Verwendet wurde das Spindel/Messbechersystem Z4 und CC27. Die Viskosität wurde scherratenabhängig aufgenommen und über den Carreau-Yasuda Algorithmus ausgewertet.

## Patentansprüche

1. Vernetzende 1-Komponenten- oder 2-Komponenten- Polyurethanzusammensetzungen, die mindestens ein NCO-terminiertes Polyurethanprepolymer enthalten, **dadurch gekennzeichnet, dass** das NCO-terminierte Polyurethanprepolymer ein Reaktionsprodukt aus Polyolen und aromatischen polymeren Isocyanaten mit einer mittleren Funktionalität von grösser 2 ist, mindestens zwei NCO-Gruppen aufweist und einen Gehalt an nicht umgesetzten monomeren Isocyanaten von < 5 Gew.-% enthält.

2. Zusammensetzung nach Anspruch 1, **dadurch gekennzeichnet, dass** die Zusammensetzung weniger als 3 Gew.-% nicht umgesetzte monomere aromatische Isocyanate enthält.

3. Zusammensetzung nach Anspruch 1, **dadurch gekennzeichnet, dass** die Zusammensetzung, weniger als 1 Gew.-% nicht umgesetzte monomere aromatische Isocyanate enthält.

4. Zusammensetzung nach Anspruch 1, **dadurch gekennzeichnet, dass** die Zusammensetzung, weniger als 0,2 Gew.-% nicht umgesetzte monomere aromatische Isocyanate enthält.

5. Zusammensetzung nach Anspruch 1, **dadurch gekennzeichnet, dass** das aromatische polymere Isocyanat einen Anteil an monomeren Isocyanaten von mindestens 10 Gew.-% enthält.

6. Zusammensetzung nach Anspruch 1, **dadurch gekennzeichnet, dass** zusätzlich monomerarme polymere aromatische Isocyanate mit einer Funktionalität größer 2 enthalten sind.

7. Verwendung einer reaktiven 1-Komponenten- oder 2-Komponenten-Polyurethanzusammensetzung gemäß Anspruch 1 als Synthesebaustein bei der Synthese von reaktiven Polyurethanprepolymeren.

8. Verwendung einer reaktiven 1-Komponenten- oder 2-Komponenten-Polyurethanzusammensetzung gemäß Anspruch 1 als vernetzende Komponente in vernetzbaren 1K- oder 2K-Polyurethanzusammensetzungen.

9. Verwendung einer reaktiven 1-Komponenten- oder 2-Komponenten-Polyurethanzusammensetzung gemäß Anspruch 1 in reaktiven 1 K- oder 2K- Klebstoff- oder Dichtmassen.

10. Verwendung einer reaktiven 1-Komponenten- oder 2-Komponenten-Polyurethanzusammensetzung gemäß Anspruch 1 in Laminierklebstoff oder Schmelzklebstoff.

11. Verwendung einer reaktiven 1-Komponenten- oder 2-Komponenten-Polyurethanzusammensetzung gemäß Anspruch 1 als Montage-, Weich-, Hart- oder Integralschaum.

12. Verwendung einer reaktiven 1-Komponenten- oder 2-Komponenten-Polyurethanzusammensetzung gemäß Anspruch 1 in mit Feuchtigkeit aushärtbaren plastischen Form- oder Vergussmassen.
